Europäisches Patentamt

European Patent Office

Office européen des brevets

(19)

(11) Numéro de publication: **0 233 797 B1**

(12) **FASCICULE DE BREVET EUROPEEN**

(45) Date de publication de fascicule du brevet:
**10.04.91**

(51) Int. Cl.⁵: **G02F 1/03**, G02F 1/29

(21) Numéro de dépôt: **87400059.9**

(22) Date de dépôt: **13.01.87**

(54) **Coupleur directif électro-optique à onde progressive et à déphasage alterné.**

(30) Priorité: **16.01.86 FR 8600561**

(43) Date de publication de la demande:
**26.08.87 Bulletin 87/35**

(45) Mention de la délivrance du brevet:
**10.04.91 Bulletin 91/15**

(84) Etats contractants désignés:
**DE GB NL**

(56) Documents cités:
**EP-A- 0 125 182**

**APPLIED PHYSICS LETTERS, vol. 45, no. 11, décembre 1984, pages 1168-1170, American Institute of Physics, Woodbury, New York, US; R.A. BECKER: "Traveling-wave electro-optic modulator with maximum bandwidth-length product"**

**APPLIED PHYSICS LETTERS, vol. 28, no. 9, 1er mai 1976, pages 503-506, American Institute of Physics, New York, US; R.V. SCHMIDT et al.: "Electro-optically switched coupler with stepped delta beta reversal using Ti-diffused LiNbO3 waveguides"**

(73) Titulaire: **ETAT FRANCAIS représenté par le Ministre des PTT (Centre National d'Etudes des Télécommunications)**
**38-40 rue du Général Leclerc**
**F-92131 Issy-les-Moulineaux(FR)**

(72) Inventeur: **Sabatier, Christian**
**Ladignac Le Long**
**F-87500 Saint Yrieix La Perche(FR)**
Inventeur: **Carenco, Alain**
**4, rue Paul-Henri Thilloy**
**F-92340 Bourg La Reine(FR)**

(74) Mandataire: **Mongrédien, André et al**
**c/o BREVATOME 25, rue de Ponthieu**
**F-75008 Paris(FR)**

## Description

La présente invention a pour objet un coupleur directif électro-optique à onde progressive et à déphasage alterné. Elle trouve une application en optique intégrée.

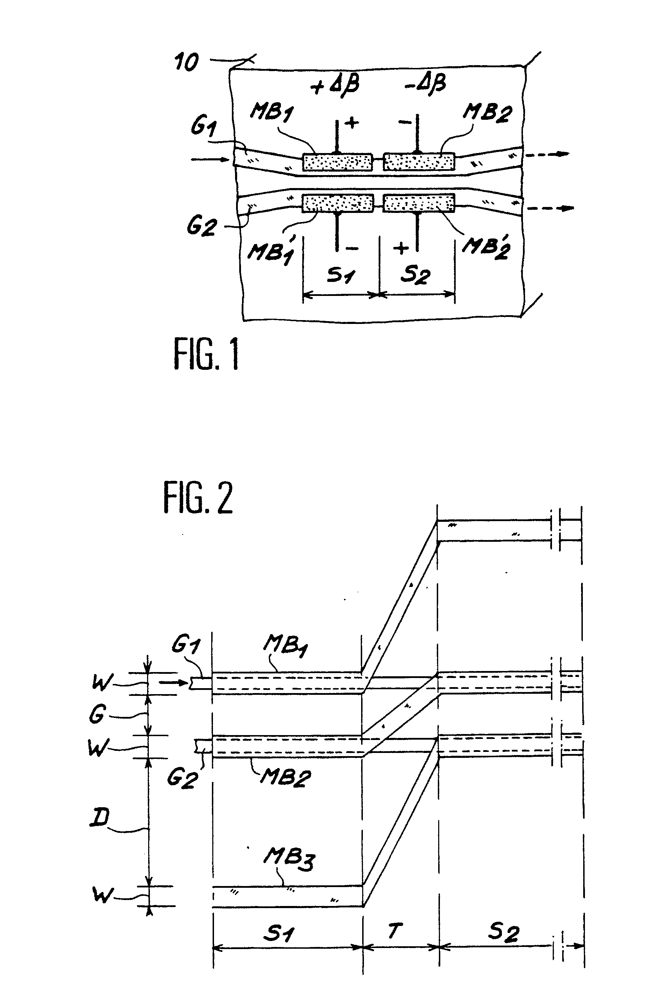

Un coupleur directif électro-optique à déphasage alterné selon l'art antérieur est représenté sur la figure 1. Un substrat 10 comprend une structure de propagation de la lumière constituée par un premier guide optique G1 et un second guide optique G2. Un ensemble d'électrodes comprend des microbandes MB1 et MB'1 dans une première section S1 et MB2, MB'2 dans une seconde section S2. Ces bandes recouvrent les guides optiques et sont reliées à des sources de tension non représentées. La lumière pénètre par le guide G1 et ressort par l'un et/ou l'autre des guides G1 et G2 selon les tensions appliquées. Un déphasage $\Delta\beta$ apparaît dans chaque section et, du fait de l'alternance des connexions électriques, ce déphasage est alterné, c'est-à-dire qu'il prend la valeur $+\Delta\beta$ dans la première section et $-\Delta\beta$ dans la seconde.

Une telle structure est décrite par exemple, dans l'article de H. KOGELNIK et R.V. SCHMIDT, intitulé "Switched Directional Couplers with Alternating $\Delta\beta$", publié dans la revue IEEE Journal of Quantum Electronics, vol QE-12, n° 7, juillet 1976, pages 396-401.

Le fonctionnement d'un tel dispositif, dans le cas où le matériau électro-optique utilisé est $LiNbO_3Ti$ et le rayonnement lumineux est à 1,06 $\mu$m est décrit par P. THIOULOUSE, A. CARENCO et R. GUGLIELMI dans un article intitulé "High-Speed Modulation of an electrooptic Directional Coupler" publié dans "IEEE Journal of Quantum Electronics", vol. QE-17, n° 4, avril 1981, pages 535-541.

Bien que de tels dispositifs donnent satisfaction, ils se heurtent néanmoins à une difficulté lorsqu'on cherche à augmenter la largeur de la bande de modulation de la lumière. Le temps de réponse du circuit est en effet limité par la valeur des constantes des électrodes et de leurs éléments d'adaptation.

Pour éviter cette difficulté, il a été proposé d'utiliser, comme structure d'électrodes, des microbandes formant une ligne de propagation pour l'onde électrique d'alimentation. On obtient alors une structure à onde progressive dans laquelle l'interaction électro-optique se maintient d'un bout à l'autre des guides. La limitation ultime provient de la différence de vitesse de propagation de l'onde optique et de l'onde électrique dans le matériau considéré.

Dans la demande de brevet français FR-A 2545947, il est décrit une structure qui est à la fois à déphasage alterné et onde progressive. Cette structure est représentée sur la figure 2. Elle comprend trois bandes conductrices, une bande centrale MB2 encadrée par une première et une seconde bandes latérales MB1, MB3. Le coupleur comprend au moins deux sections S1 et S2 séparées par une zone de transition T. Dans la première section S1 la bande centrale MB2 recouvre le second guide optique G2, la première bande latérale MB1 recouvre le premier guide optique G1 et la seconde bande latérale MB3 est très écartée de la bande centrale. Dans la seconde section S2 la situation est symétrique : la bande centrale recouvre le guide G1, la première bande latérale MB1 est très écartée et c'est la seconde bande latérale MB3 qui vient recouvrir le guide G2.

Dans la zone de transition T qui maintient l'adaptation d'impédance la bande centrale est inclinée par rapport la direction des guides optiques et passe progressivement du second au premier guide. Les bandes latérales passent elles aussi progressivement d'une position à une autre : la première bande latérale MB1 qui recouvrait le premier guide G1 dans la première section S1 s'éloigne de celle-ci et reste ensuite très écartée de la bande centrale dans la seconde section S2, tandis que la seconde bande latérale MB3, qui était très écartée de la bande centrale dans la première section S1 se rapproche de celle-ci et vient recouvrir le second guide optique G2 dans la seconde section S2.

Les trois bandes ont une largeur W et l'écartement entre la bande centrale et les bandes latérales est égal soit à G soit à D, D étant beaucoup plus grand que G. Cette dernière condition entraîne que la bande latérale écartée de D ne participe pratiquement pas à la ligne de propagation de l'onde électrique, cette ligne étant essentiellement constituée par la bande centrale et celle des deux bandes latérales qui est la plus proche. Dans la demande de brevet citée, cette ligne de propagation est donc symétrique puisque les deux bandes la constituant ont la même largeur. Les valeurs de W, G et D sont par ailleurs choisies pour que l'impédance caractéristique de la ligne soit adaptée au générateur délivrant l'onde électrique. En pratique cette impédance est souvent de 50Ω

La présente invention a pour objet un dispositif de ce type mais qui préconise l'utilisation d'une première et d'une seconde bandes latérales de largeur très grande devant la largeur de la bande centrale et reliées entree elles par un élément conducteur électrique. Ces bandes latérales constituent alors des plans de masse et sont reliées au boîtier métallique contenant le dispositif. Il en résulte une moindre sensibilité au boîtier et une élimination des résonances parasites. Ceci se traduit par une bande passante électrique moins perturbée qu'avec le dispositif antérieur.

De toute façon les caractéristiques de l'invention apparaîtront mieux à la lumière de la description qui va suivre, d'un exemple de réalisation donné à titre illustratif et nullement limitatif.

Cette description se réfère à des dessins annexés sur lesquels :
- la figure 1, déjà décrite, représente un coupleur à déphasage alterné selon l'art antérieur,
- la figure 2, déjà décrite, représente un coupleur à onde progressive et à déphasage alterné selon l'art antérieur,
- la figure 3 représente un coupleur selon l'invention,
- la figure 4 est un graphique permettant de définir les différents paramètres de la ligne en fonction de l'impédance caractéristique désirée.

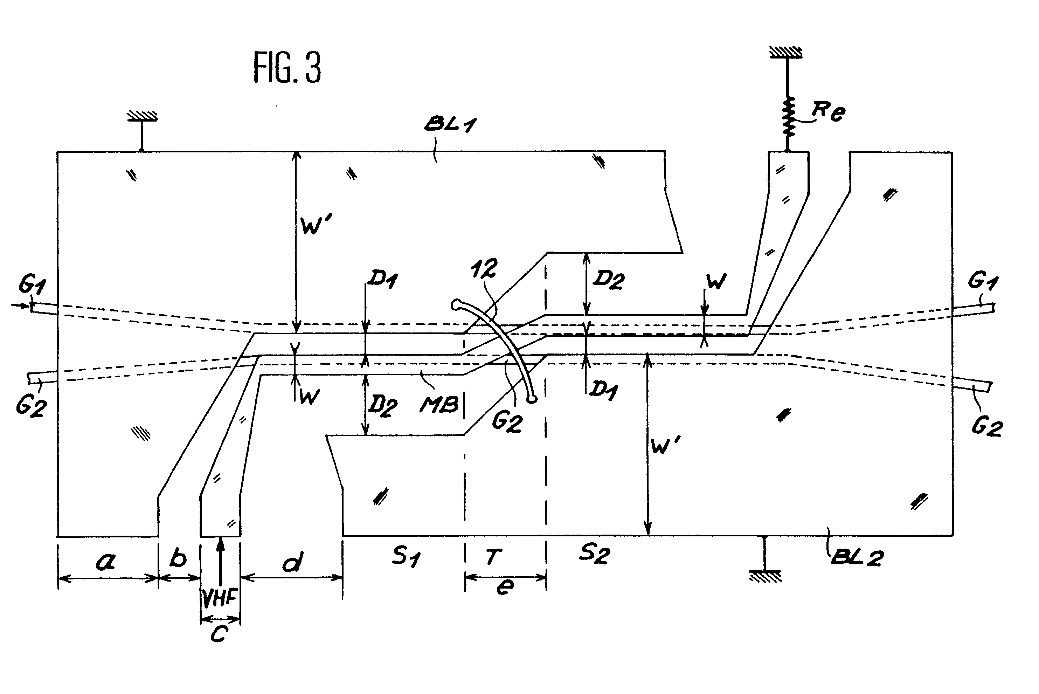

Sur la figure 3 on voit un coupleur selon l'invention. Ce coupleur comprend deux guides optiques G1 et G2 et trois électrodes, à savoir une microbande centrale MB, une première bande latérale BL1 et une seconde bande latérale BL2. Dans la zone d' interaction les bandes latérales ont une largeur W' très supérieure à la largeur W de la microbande centrale. Par ailleurs, cette dernière est distante des bandes latérales respectivement de DI et de D2. Le coupleur représenté comprend, dans l'exemple illustré, deux sections S1 et S2 et une transition T. Mais naturellement on peut réaliser un coupleur à plus de deux sections (par exemple 3 ou 4, ...).

Dans le mode de réalisation illustré, la microbande centrale est coudée à chacune de ses extrémités, respectivement vers le bas et vers le haut, pour faciliter la connexion avec le générateur d'alimentation et la charge adaptée Re et ceci en dégageant les entrées et les sorties des guides optiques G1 et G2.

Dans le cas où l'on utilise comme matériau électro-optique $LiNbO_3$ on pourra choisir par exemple : $W = 10\mu m$, $D1 = 17\mu m$ et $D2 = 200\mu m$, ce qui correspond à une impédance caractéristique de 50Ω. La largeur W' peut être de l'ordre du millimètre ou plus, c'est-à-dire plus de 100 fois la largeur W. Par ailleurs, les longueurs marquées de a à e pourront avoir les valeurs suivantes (en $\mu m$) :
a = 1700
b = 170
c = 100
d = 2000
e = 100

Dans le cas où l'on intercale une couche mince de $SiO_2$ d'épaisseur $0,3\mu m$ entre le cristal et les conducteurs métalliques on choisira : $W = 10\mu m$, $D1 = 5\mu m$ et $D2 = 200\mu m$, pour avoir toujours une impédance caractéristique de 50Ω. Dans ce cas, on donnera à b la valeur de $100\mu m$ et à c la valeur de $200\mu m$.

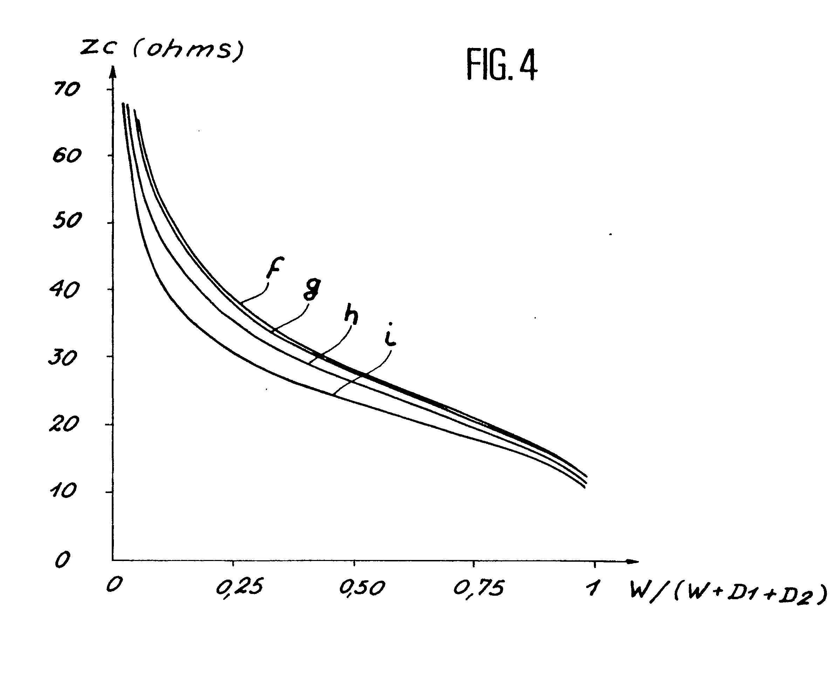

La figure 4 donne un moyen de trouver les différents paramètres W, D1 et D2 pour une impédance caractéristique Zc donnée. Les courbes f, g, h et i correspondent à un rapport D1/D2 égal respectivement à 1/0, 5/0, 25/0,1. En abscisses est porté le rapport W/(W + D1 + D2) et en ordonnées l'impédance caractéristique exprimée en ohms.

Comme dans l'art antérieur, la microbande centrale MB doit être reliée au conducteur central du câble coaxial d'alimentation alors que les deux électrodes latérales sont reliées au conducteur extérieur, c'est-à-dire, en pratique, à la masse.

Les résonances parasites causées par le couplage des modes rayonnants de la ligne de propagation sont éliminés par la mise en place de liaisons conductrices entre les deux plans de masse BL1 et BL2. En pratique, cette liaison, référencée 12 sur la figure 3, est un fil d'or d'une cinquantaine de micromètres de diamètre, rapporté sur les électrodes.

Le procédé de réalisation du coupleur de l'invention peut être identique à celui qui a été décrit dans la demande de brevet citée plus haut.

**Revendications**

1. Coupleur directif électro-optique à onde progressive et à déphasage alterné, du genre de ceux qui comprennent une structure de propagation de la lumière constituée par un substrat contenant un premier guide optique (G1) et un second guide optique (G2), cette structure étant recouverte par un ensemble d'électrodes comprenant trois bandes conductrices déposées sur le substrat, une bande centrale (MB) encadrée par une première et une seconde bandes latérales (BL1, BL2), ce coupleur comprenant au moins deux sections (S1, S2) séparées par une zone de transition (T), une première section (S1) dans laquelle la bande centrale (MB) recouvre le second guide optique (G2), la première bande latérale (BL1) recouvre le premier guide optique (G1) et la seconde bande latérale (BL2) est très écartée de la bande centrale, et une seconde section (S2) dans laquelle la bande centrale (MB) recouvre le premier guide optique (G1), la seconde bande latérale (BL2) recouvre le second guide optique (G2) et la première bande latérale (BL1) est trés écartée de la bande centrale (MB), et une zone de transition (T) dans laquelle la bande centrale (MB) est inclinée par rapport à la direction des guides optiques (G1 et G2) et passe progressivement du second au premier guide dans laquelle les bords des bandes latérales sont également inclinés de telle sorte que la première bande latérale (BL1), qui recouvrait le premier guide optique (G1) dans la première section (S1) s'éloigne de celui-ci et reste ensuite très écartée de la bande centrale (MB) dans la seconde section (S2) tandis que la seconde bande latérale, qui était très écartée de la bande centrale (MB) dans la première section (S1) se rapproche de celle-ci et vient recouvrir le second guide optique (G2) dans la seconde section (S2), la bande centrale ayant, dans les deux sections, une largeur (W) et étant écartée de la première bande latérale (BL1) d'un intervalle D1 et de la seconde bande latérale (BL2) d'un intervalle D2, ceci dans la première section, et respectivement écartée d'intervalles D2 et D1 dans la seconde section, la bande centrale et celle des deux bandes latérales qui est la plus proche de la bande centrale essentiellement formant la ligne, de propagation, les quantités W, D1 et D2 étant choisies de telle sorte que l'impédance caractéristique de la ligne de propagation formée par ces électrodes soit égale à une valeur donnée, cette valeur étant maintenue dans la transition T, ce coupleur étant caractérisé par le fait que la première et la seconde bandes latérales (BL1, BL2) ont une largeur (W') très grande devant la largeur (W) de la bande centrale et sont reliées entre elles par un élément conducteur électrique.

and goes progressively from the second to the first guide in which the edges of the lateral strips are also inclined so that first lateral strip (BL1), which covered first optical guide (G1) in first section (S1) moves away from the latter and then remains very far from central strip (MB) in a second section (S2), while the second lateral strip, which was very far from central strip (MB) in first section (S1) comes close to the latter and comes to cover second optical guide (G2) in second section (S2), the central strip having, in the two sections, a width (W) and being far away from first lateral strip (BL1) by an interval D1 and from second lateral strip (BL2) by an interval D2, in the first section, and respectively separated by intervals D2 and D1 in the second section, the central strip and that of the two lateral strips closest to the central strip essentially forming the propagation line, the quantities W, D1 and D2 being chosen in such a way that the characteristic impedance of the propagation line formed by these electrodes is equal to a given value, which is maintained in the transition T, said coupler being characterized in that the first and second lateral strips (BL1, BL2) have a very large width (W') compared with the width (W) of the central strip and are interconnected by an electrically conductive element.

## Claims

1. Electrooptical directional coupler with travelling wave and alternating phase shift of the type of those which comprise a light propagation structure consisting of a substrate containing a first optical guide (G1) and a second optical guide (G2), this structure being covered by a set of electrodes comprising three conductive strips deposited on the substrate, a central strip (MB) framed by a first and second lateral strips (BL1, BL2), this coupler comprising at least two sections (S1, S2) separated by a transition zone (T), a first section (S1) in which central strip (MB) covers second optical guide (G2), first lateral strip (BL1) covers first optical guide (G1) and second lateral strip (BL2) is very far from the central strip, and a second aim section (S2) in which central strip (MB) covers first optical guide (G1), second lateral strip (BL2) covers second optical guide (G2), and first lateral strip (BL1) is very far from central strip (MB), and a transition zone (T) in which central strip (MB) is inclined in relation to the direction of optical guides (G1 and G2)

## Ansprüche

1. Elektrooptischer Richtungskoppler mit fortschreitenden Wellen und alternierender Phasenverschiebung der Sorte, die eine Struktur der Lichtfortschreitung umfasst, die aus einem Substrat besteht, das einen ersten Lichtleiter (G1) und einen zweiten Lichtleiter (G2) enthält, wobei diese Struktur mit einer Elektrodenanordnung bedeckt ist, die drei leitfählge, auf dem Substrat abgeschiedene Bänder umfaßt, wobei ein zentrales Band (MB) von ersten und zweiten lateralen Bändern (BL1, BL2) umrahmt ist, wobei dieser Koppler wenigstens zwei durch eine Übergangszone (T) getrennte Bereiche (S1, S2) umfaßt, nämlich einen ersten Bereich (S1), in dem das zentrale Band (MS) den zweiten Lichtleiter (G2) bedeckt, das erste laterale Band (BL1) den ersten Lichtleiter (G1) bedeckt und das zweite laterale Band (BL2) weit von dem zentralen Band entfernt ist, und einen zweiten Bereich (S2) in dem das zentrale Band (MB) den ersten Lichtleiter (G1) bedeckt, das zweite laterale Band (BL2) den zweiten Lichtleiter (G2) bedeckt und das erste laterale Band (BL1) weit von dem zentralen Band (MB) entfernt ist, und eine Übergangszone (T), in der das zentrale Band (MB) bezüglich der Richtung der Lichtleiter (G1 und G2) geneigt ist und fortschreitend vom zweiten zum ersten Leiter geht und in der die Ränder der lateralen Bänder ebenfalls derart geneigt sind, daß das erste laterale Band (BL1), das den ersten Lichtleiter (G1) im ersten Bereich (S1) bedeckte, sich von diesem entfernt und danach im zweiten Bereich (S2) weit von den zentralen Band (MB) entfernt bleibt, während das zweite laterale Band (BL2), das im ersten Bereich (S1) weit von dem zentralen Band (MB) entfernt war, sich diesem nähert und im zweiten Bereich den zweiten Lichtleiter (G2) bedeckt, wobei das zentrale Band in den beiden Bereichen eine Breite (W) besitzt und von dem ersten lateralen Band (BL1) durch einen Abstand D1 und von dem zweiten lateralen Band (BL2) durch einen Abstand D2 getrennt ist, dieses im ersten Bereich, und jeweils durch die Abstände D2 und D1 im zweiten Bereich getrennt ist, wobei das zentrale Band und dasjenige laterale Band, das dem zentralen Band am nächsten ist, die Fortschreitungsleitung bilden, wobei die Größen W, D1 und D2 so ausgewählt sind, daß die charakteristische Impedanz der durch diese Elektroden gebildeten Fortschreitungsleitung einem gegebenen Wert gleich ist, wobei dieser Wert am Übergang T aufrecht erhalten wird, wobei dieser Koppler charakterisiert ist durch die Tatsache, daß die ersten und zweiten lateralen Bander (BL1, BL2) eine sehr große Breite (W') gegenüber der Breite (W) des zentralen Bandes besitzen und untereinander durch ein elektrisches Leiterelement verbunden sind.

**FIG. 1**

**FIG. 2**

# FIG. 3

EP 0 233 797 B1

FIG. 4

Zc (ohms)

W/(W+D1+D2)